# EUROPÄISCHE PATENTSCHRIFT

(11) **EP 2 852 773 B1**
(45) Veröffentlichungstag und Bekanntmachung des Hinweises auf die Patenterteilung: **07.03.2018**
(21) Anmeldenummer: 13791731.6
(22) Anmeldetag: 23.05.2013
(51) Int. Cl.: F16D 67/04

(54) **KUPPLUNGS-BREMS-KOMBINATION**
CLUTCH-BRAKE COMBINATION
ASSOCIATION EMBRAYAGE-FREIN

(30) Priorität: 23.05.2012 DE 102012013788
(43) Veröffentlichungstag der Anmeldung: 01.04.2015
(73) Patentinhaber: Ortlinghaus-Werke GmbH, 42929 Wermelskirchen (DE)
(72) Erfinder: SEEGER, Herbert, 32547 Bad Oeynhausen (DE)
(74) Vertreter: Rausch Wanischeck-Bergmann Brinkmann
(86) Internationale Anmeldenummer: PCT/EP2013/001517
(87) Internationale Veröffentlichungsnummer: WO 2014/008963

(56) Entgegenhaltungen:
- EP-A2- 1 150 033
- EP-A2- 2 295 825
- WO-A1-96/01957
- DE-U1- 9 014 424

## Beschreibung

Die vorliegende Erfindung betrifft eine Kupplungs-Brems-Kombination nach Oberbegriff des Hauptanspruchs.

Derartige Kupplungs-Brems-Kombinationen sind hinreichend bekannt.

Üblicherweise sind bei derartigen Kupplungs-Brems-Kombinationen die Pakete der Kupplungs- bzw. Bremslamellen auf einem Träger angeordnet. Das Paket der Kupplungslamellen wird über die hydraulische Kolben-Zylinder-Einheit zusammengepresst. Dabei wird die hydraulische Kraft auch gegen die Federvorlast aufgebracht, die notwendig ist, um im Falle eines notwendigen Bremsvorgangs das Paket der Bremslamellen ohne weitere Einflussmöglichkeit von außen zusammenzupressen.

Derartige Vorrichtungen finden beispielsweise Anwendung bei Pressen zum Herstellen von Karosserieteilen um nach einem Hub, der bei geschlossener Kupplung ausgeführt wird, den Pressenstempel mit Sicherheit offen zu halten zum Werkstückwechsel, so dass anschließend der nächste Hub stattfinden kann.

Es kommt daher bei diesen Kupplungs-Brems-Kombinationen wesentlich auf das Zusammenwirken der beiden Teileinheiten von Kupplung und Bremse an, wobei natürlich die Sicherheitsfunktion der Bremse im Vordergrund steht, um das System zu keinem einzigen Zeitpunkt unkontrolliert sich selbst überlassen zu müssen.

Weiterhin ist bekannt, solche Kupplungs-Brems-Kombinationen modular aufzubauen um für den jeweiligen Anwendungsfall auf die einzelnen Komponenten zugreifen zu können, die jeweils notwendig sind.

Dabei muss auch beachtet werden, dass mit den heutigen Bauformen nur bestimmte, begrenzte Drehmomente erreicht werden können und dass eine Erhöhung der geforderten Drehmomente nur über eine vergrößerte Bauform möglich ist.

Dieser Aspekt kommt insbesondere im Zuge zunehmender Globalisierung zum Tragen, wenn für die jeweiligen Pakete der Kupplungs- bzw. Bremslamellen aufgrund der weltweiten Anwendung unterschiedlichste Ölsorten zur Verfügung stehen um die geforderten Reibkräfte, die ein Synonym für die Drehmomente sind, zuverlässig aufbringen zu können.

Aus dem Stand der Technik ist gemäß der WO 96/01957 eine weitere Ausführungsform einer Kupplungs-Brems-Kombination bekannt. Die WO 96/01957 A1 betrifft eine Kupplungs-Brems-Kombination, mit welcher wahlweise ein Abbremsen einer Antriebswelle einer Presse oder ein Abbremsen eines die Presse antreibenden Schwungrads realisiert werden soll. Bei der offenbarten Kupplungs-Brems-Kombination sind die Pakete der Kupplungslamellen und der Bremslamellen übereinander angeordnet, wobei dazwischen eine Einheit aus einem stangenförmigen Koppelelement und einer Schraubenfeder angeordnet ist.

Es ist daher Aufgabe der vorliegenden Erfindung, Maßnahmen vorzuschlagen, mit denen ohne Veränderung der heute üblichen Baugrößen bei voller Kompatibilität der Anschlussabmessungen derartige Kupplungs-Brems-Kombinationen die Übertragung erhöhter Drehmomente ermöglichen.

Diese Aufgabe löst die hier vorliegende Erfindung mit den Merkmalen des Hauptanspruchs.

Die Erfindung hat erkannt, dass es zunächst einmal wesentlich auf eine deutliche Vergrößerung der auf den Kolben der hydraulischen Kolben-Zylinder-Einheit ausgeübten Kräfte ankommt.

Zu diesem Zweck muss der Anordnung der für die Sicherheitsbremse notwendigen Federn mehr Bauraum zur Verfügung gestellt werden wobei zugleich die Koppelung der Funktionen von Kupplung und Sicherheitsbremse erhalten bleiben muss.

Es kommt insoweit also wesentlich darauf an, die Federn in einem Bereich der Kupplungs-Brems-Kombination anzuordnen, der es ermöglicht, mehr Federn anzuordnen und auf diese Weise das Bremsmoment zu erhöhen.

Durch die Erfindung wird die gesamte zur Verfügung stehende axiale Länge des Trägers aufgeteilt in eine erste Teillänge, innerhalb welcher die Druckbolzen angeordnet sind und eine zweite Teillänge, in welcher die Federn angeordnet sind. Dadurch lassen sich wesentlich mehr Federn vorsehen, da der Einbauraum der Feder nicht durch den Einbauraum der Druckbolzen verringert wird.

Zu diesem Zweck müssen sich die Druckbolzen auf einer Teillänge des Trägers achsparallel durch den Träger hindurch erstrecken. Auf dem Außenumfang des Trägers sitzen die Pakete der Kupplungs-/Bremslamellen jeweils auf Außen- bzw. Innenverzahnungen und ermöglichen auf diese Weise die gewünschte Kupplungs- bzw. Bremsfunktion.

Die Verlagerung der Federn auf die Bremsseite des Trägers trägt aber insbesondere dem Gedanken Rechnung, die Baugruppe der Kolben-Zylinder-Einheit, welche für das maximal mögliche Kupplungsmoment ausgelegt ist, im Durchmesser praktisch beliebig zu vergrößern, um das Kupplungsmoment zu erhöhen und andererseits den Einbauraum der Federn nicht durch die Koppelelemente zu verkleinern.

Die Anordnung der Federn auf der zweiten Teillänge des Trägers zusammen mit den Druckbolzen auf der ersten Teillänge ermöglicht es weiterhin, die Federanzahl zu erhöhen ohne dass der für die Druckbolzen notwendige Platzbedarf beeinträchtigt wird und ungekehrt.

Es ist daher eine Erkenntnis der Erfindung, dass durch diese Maßnahmen die Außenabmessungen der Kupplungs-Brems-Kombination praktisch nicht erhöht werden, während zugleich das von der Kupplung aufgebrachte Drehmoment vergrößert werden kann und zugleich damit auch über eine Vergrößerung der Anzahl der Federn der Sicherheitsbremse ein entsprechend höheres Bremsmoment erzeugt wird.

Zu diesem Zweck wird in einer Weiterbildung vorgeschlagen, dass sich die Federn zwischen dem Außendurchmesser des Trägers und dem auf die Bremslamellen wirkenden Druckstück abstützen, auf welchem sich auch die Druckbolzen abstützen.

Hierzu muss der Träger eine entsprechende Abstützfläche für die Federn bereitstellen und der auf die Bremslamellen wirkende Teil des Druckstücks ebenfalls.

Die jeweiligen Abstützflächen sind aus Symmetriegründen ringförmig angeordnet.

Die Anordnung der Federn bzw. Druckbolzen erfolgt wechselweise nach entsprechenden Vorgaben der Konstruktion.

Hierunter ist zu verstehen, dass sich die Federn mit den Druckbolzen 1 : 1 oder 2 : 1 oder 3 : 1 ... abwechseln können, wobei selbstverständlich die Anordnung rotationssymmetrisch bleiben muss.

Eine Weiterbildung der Erfindung sieht vor, dass sich das Paket der Bremslamellen und ebenso das Paket der Kupplungslamellen jeweils auf einem zentral dazwischen auf dem Träger sitzenden Anschlag abstützen. Zu diesem Zweck erstrecken sich die Druckbolzen von der Kolben-Zylinder-Einheit ausgehend durch den Träger hindurch in Richtung zum Paket der Bremslamellen und greifen dort an einem für die Zusammenpressung des Pakets der Bremslamellen vorgesehenen Druckstück an, welches ringförmig ausgebildet ist, welches in der Richtung zu der Kolben-Zylinder-Einheit von den Federn beaufschlagt ist.

Da der Zentralanschlag, der sich auf dem Träger befindet, axial unverschieblich ist, kann auf diese Weise das notwendige Wechselspiel zwischen der Kupplung und der Sicherheitsbremse sichergestellt werden.

Vorzugsweise ist der Zentralanschlag als ein separates Bauteil ausgebildet, der auf den Außenumfang des Trägers aufgebracht und dort axial unverschieblich befestigt ist.

Der zur Verfügung stehende Einbauraum sowohl der Federn als auch der Druckbolzen ist im Grunde durch den ringförmigen Querschnitt des Trägers begrenzt, wobei allerdings der Einbauraum der Federn nicht vom Einbauraum der Druckbolzen beeinträchtigt wird.

Um diesen Bauraum optimal ausnutzen zu können, wird vorgeschlagen, dass sich die Federn, die zweckmäßig Schraubenfedern sind, und Zuganker auf jeweils ein und demselben Radius befinden.

Hierfür sind Ausführungsbeispiele angegeben.

Weiterhin wird vorgeschlagen, die Kolben-Zylinder-Einheit, die auf der Kupplungsseite des Trägers sitzt, über eine Axialbohrung, die sich in eine Radialbohrung in den Druckraum der Kolben-Zylinder-Einheit fortsetzt, an das Hydrauliksystem der Maschine anzuschließen.

Auch hierfür sind Ausführungsbeispiele angegeben.

Weiterhin ist es zweckmäßig, die Druckbolzen durch Abschnitte aus Profilstahl zu bilden, die sich mit ihren Stirnenden einerseits am Kolben der Kolben-Zylinder-Einheit abstützen und andererseits am Druckstück auf der Seite der Sicherheitsbremse.

Da die Druckbolzen alle von gleicher Länge sind und sowohl der Kolben der Kolben-Zylinder-Einheit als auch das Druckstück von Drehteilen gebildet werden, ist eine hinreichende Genauigkeit der gesamten Anpresssituation am Paket der Bremslamellen gewährleistet.

Zwischen zwei benachbarten Druckbolzen sitzen dann jeweils eine oder mehrere Federn, deren Vorspannkraft dann über die Druckbolzen in Öffnungsrichtung auf das Paket der Kupplungslamellen einerseits und andererseits über das Druckstück in Schließrichtung auf das Paket der Bremslamellen übertragen wird.

Die Anordnung der Druckbolzen wird erreicht, in dem der Träger für die Druckbolzen mit Durchgangslöchern versehen wird.

Im Folgenden wird die Erfindung anhand von Ausführungsbeispielen näher erläutert:
Es zeigen:
   - Fig.1:: eine erfindungsgemäße Kupplungs-Brems-Kombination im Axialschnitt
   - Fig.2: eine alternative Ausführungsform der Erfindung

Die Figuren zeigen eine Kupplungs-Brems-Kombination 1 nach vorliegender Erfindung.

Auf einem gemeinsamen Träger 4 sind an einem Ende ein Paket von Kupplungslamellen 2 und am anderen Ende ein Paket von Bremslamellen 3 angeordnet.

Kupplungs- bzw. Bremslamellen sind ringförmig gestaltet und weisen an ihrem Innenumfang eine Verzahnung auf, mit welcher sie auf einer korrespondierenden Verzahnung, die am Außenumfang des Trägers 4 vorgesehen ist, axial verschieblich am Außenumfang des Trägers 4 sitzen.

Die Kupplung 20 wird über eine Kolben-Zylinder-Einheit 10 in der Schließrichtung 5 beaufschlagt und kann, wenn die Kupplung dann geschlossen ist, über ihre am Außenumfang vorgesehene Verzahnung den Abtrieb für die nachgeordneten Maschinenkomponenten hervorrufen.

Zu diesem Zweck ist die Kolben-Zylinder-Einheit 10 mit einem ringförmigen Zylinder 11 ausgestattet, der den Außenumfang des Trägers 4 mit Abstand ringförmig umgibt.

In den Zwischenraum zwischen dem Außenumfang des Trägers 4 und dem parallel dazu verlaufenden Innenumfang des Zylinders 11 greift ein Kolben 12 ein, der im Gegensatz zum Zylinder 11 bezüglich des Trägers 4 axial verschieblich ist.

Der Kolben 12 wird mit seinem, dem Boden des Zylinders 11 zugewandten Stirnende von der im Druckraum befindlichen Hydraulikflüssigkeit beaufschlagt und kann infolge dessen, entsprechende Druckbeaufschlagung vorausgesetzt, in Richtung zum Paket der Kupplungslamellen 2 verlagert werden.

Dabei stößt er mit seiner dem Paket der Kupplungslamellen 2 zugewandten Ringfläche, auf die ihm zugewandte erste Kupplungslamelle und wird dann weiter in Richtung zum Paket 2 der Kupplungslamellen verlagert, so dass dieses Paket zusammengepresst wird.

Wesentlich ist nun, dass die Federn auf der Seite der Sicherheitsbremse 30 des Trägers 4 sitzen, welcher die jeweiligen Pakete 2,3 der Kupplungslamellen bzw. Bremslamellen aufnimmt und dass die Koppelelemente, mit deren Hilfe die Axialbewegungen der Kolben-Zylinder-Einheit 10 einerseits und des Druckstücks 8 andererseits gekoppelt werden, als Druckbolzen ausgeführt sind, die sich axial von der Seite der Sicherheitsbremse 30 zur Seite der Kupplung 20 erstrecken und innerhalb des Außenumfangs des Trägers 4 in dort eingebrachten Axialnuten verlaufen.

Auf diese Weise wird nämlich die Bewegung des Kolbens 12, die dieser zum Schließen der Kupplung vollzieht auf die Seite der Sicherheitsbremse übertragen und dort zum Lüften der Sicherheitsbremse 20 verwendet. Es kommt also wesentlich auf die Axialbewegung des Durckbolzens 7 an, der, veranlasst durch die Verlagerung des Kolbens 12 der Kolben-Zylinder-Einheit 10 in Schließrichtung der Kupplung aufgeprägt bekommt und in der anderen Richtung durch die Vorspannkraft der Federn 9 bei druckentlastetem Hydraulikraum 13.

Zeitgleich wird also durch diese Verlagerung erreicht, dass die auf dem inneren Ringbereich 60 des Druckstücks 8 abgestützten Federn 9 zusammengedrückt werden.

Wird also der Hydraulikraum 13, der sich zwischen der inneren Stirnfläche des Zylinders 11 und der gegenüberliegenden inneren Stirnfläche des Kolbens 12 befindet, mit Hydraulikflüssigkeit gefüllt, wird das Paket der Kupplungslamellen zusammengepresst.

Dies wird auch dadurch ermöglicht, dass das Paket der Kupplungslamellen auf der von der Kolben-Zylinder-Einheit abgewandten Seite auf einen Anschlag 14 läuft der axial unverschieblich auf dem Träger 4 sitzt.

Da der Träger 4 üblicherweise über eine drehfeste Verbindung zum Beispiel mittels einer Passfeder (nicht gezeigt) mit der rotierenden Maschinenwelle verbunden ist, kann das Kupplungspaket, sobald es zusammengepresst ist, mit den am Außenumfang der Kupplungslamellen befindlichen Zähnen das entsprechende Drehmoment auf nachgeordnete Maschinenteile übertragen.

Das Schließen der Kupplung durch Bewegung in Schließrichtung 5 führt also zu einer Verkürzung der Federn 9, wobei die im Hydraulikraum 13 befindliche Hydraulikflüssigkeit natürlich mit zunehmender Verlagerung des Kolbens 12 der Kolben-Zylinder-Einheit in Richtung zum Paket der Kupplungslamellen 2 auch einer zunehmenden Vorspannkraft der dabei zusammengepressten Federn 9 ausgesetzt wird.

Die Figuren lassen insbesondere erkennen, dass mit der Bewegung des Kolbens 12, also des beweglichen Teils der Kolben-Zylinder-Einheit 10, nicht nur die Federn 9 zusammengepresst werden, sondern auch die druckstarr auf dem Kolben 12 abgestützten Koppelelemente 7, die als Druckbolzen in Axialnuten 61 des Trägers 4 sitzen.

Infolge dessen werden die Koppelelemente 7 mit der Verlagerung des Kolbens 12 der Kolben-Zylinder-Einheit 10 in Richtung zum Paket der Kupplungslamellen 2 nach rechts verlagert, so dass auch das gemeinsame Druckstück 8, welches für die Sicherheitsfunktion der Sicherheitsbremse 30 zuständig ist, nach rechts verlagert wird.

Infolge dessen wird das Paket der Bremslamellen 3 der rechts befindlichen Sicherheitsbremse 30 gelüftet und die Bremse geöffnet.

Wesentlich ist insoweit, dass zwischen dem beweglichen Teil der Kolben-Zylinder-Einheit 10, hier des Kolbens 12 und dem für die Sicherheitsbremse zuständigen Druckstück 8, eine in Lüftungsrichtung der Bremse druckstarre und ebenso in Schließrichtung der Bremse druckstarre Verbindung besteht, die über die Koppelelemente 7 sichergestellt ist und bleibt.

Kolben 12 und Druckstück 8 bewegen sich daher stets entweder in Lüftungsrichtung der Bremse oder in Schließrichtung, wobei durch die jeweiligen Längenabmessungen und Wege, die der Kolben 12 der Kolben-Zylinder-Einheit 10 zurücklegen kann, die Wechselfunktion zwischen Kupplung 20 und Sicherheitsbremse 30 sichergestellt ist.

Zu diesem Zweck sitzen die Federn 9, die hier als Schraubenfedern ausgebildet sind, auf der Bremsseite des Trägers 4 in dort befindlichen umfangsmäßig verteilten Sacklöchern des Druckstücks 8, deren Sacklochboden jeweils eine Abstützfläche für die Schraubenfedern 9 bereitstellt.

Die Länge der Schraubenfedern 9 ist so gewählt, dass sie auch mit ihrer größtmöglichen Einbaulänge immer noch unter Vorspannkraft gegen den Kolben 12 der Kolben-Zylinder-Einheit 10 drücken, so dass die Summe der von allen Schraubenfedern 9 auf den Kolben 12 ausgeübten Vorspannkräfte über die Druckbolzen 9 in vollem Umfang auch auf das Druckstück 8 der Bremse übertragen wird.

Infolge dessen wird das Paket der Bremslamellen 3 von dem zugehörigen Druckstück 8 zusammengepresst.

Dabei dient ebenfalls ein zentral zwischen den Paketen der Kupplungs- bzw. Bremslamellen 2,3 angeordneter Anschlag 14 dem Zweck, dem vollständigen Restdruck des Druckstücks 8 entgegenzuwirken um auf diese Weise das erforderliche Bremsmoment von den Bremslamellen zu ermöglichen.

Es ist insoweit wesentlich, dass die Federn 9 als Schraubenfedern ausgeführt sind, auf der Bremsseite des Trägers 4 sitzen und dass die Koppelelemente als Druckbolzen 7 von vorgegebener Wirklänge ausgebildet sind, die sich axial von der Seite der Kupplung 20 zu Seite der Sicherheitsbremse 30 durch den Träger 4 hindurcherstrecken und dort auf ein Druckstück 8 wirken, welches zum axialen Zusammendrücken des Pakets der Bremslamellen 3 dient.

Die für das Wechselspiel zwischen Kupplungs- und Bremsfunktion notwendigen Bauelemente, nämlich die Druckbolzen 7, sitzen vollständig innerhalb des Trägers 4 und zwischen dem Kolben 12 der Kolben-Zylinder-Einheit und dem Druckstück 8 der Bremse besteht eine starre Verbindung, so dass Kolben 12 und Druckstück 8 allein durch Beaufschlagung des Hydraulikraums 13 mit Hydraulikflüssigkeit bzw. Entlastung des Hydraulikraums 13 durch Ablassen von Hydraulikflüssigkeit hin und her bewegt werden.

Die Hinbewegung, d.h. die Bewegung in Schließrichtung 5 der Kupplung erfolgt dabei gegen wachsende Rückstellkraft der Schraubenfedern 9, die Öffnungsrichtung der Kupplung, die identisch mit der Schließrichtung 6 der Bremse 30 ist, erfolgt unter Verringerung der Vorspannkraft der Schraubenfeder 9 mit gleichzeitiger Druckentlastung des Hydraulikraums 13.

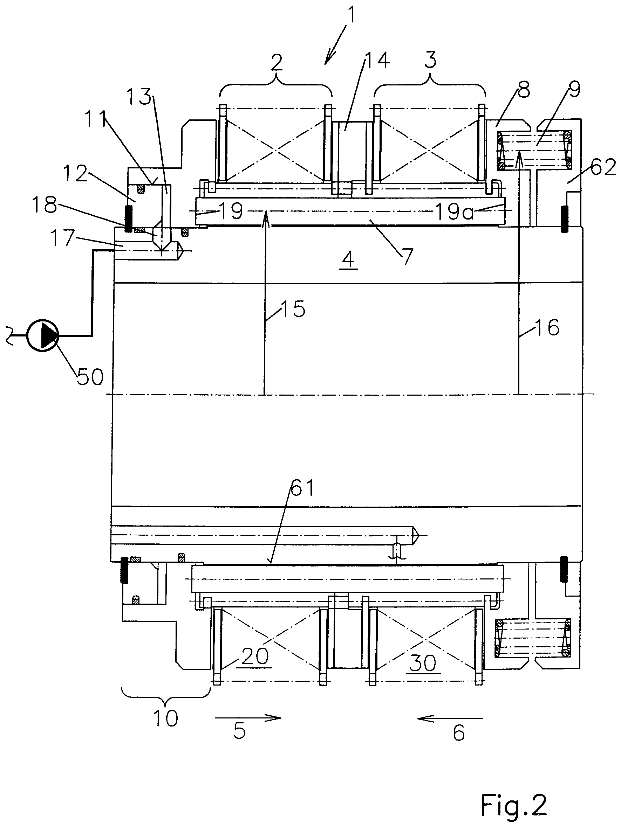

Im konkreten Ausführungsbeispiel der Fig.2 erstrecken sich zu diesem Zweck die Druckbolzen 7 von der Kolben-Zylinder-Einheit 10 ausgehend durch den Träger 4 hindurch bis über das Paket der Bremslamellen 3 hinaus und greifen dort gemeinsam an einem als Druckring ausgebildeten Druckstück 8 an, der mit seiner, dem Paket der Bremslamellen 3 zugewandten Pressfläche gegen das Paket der Bremslamellen drückt.

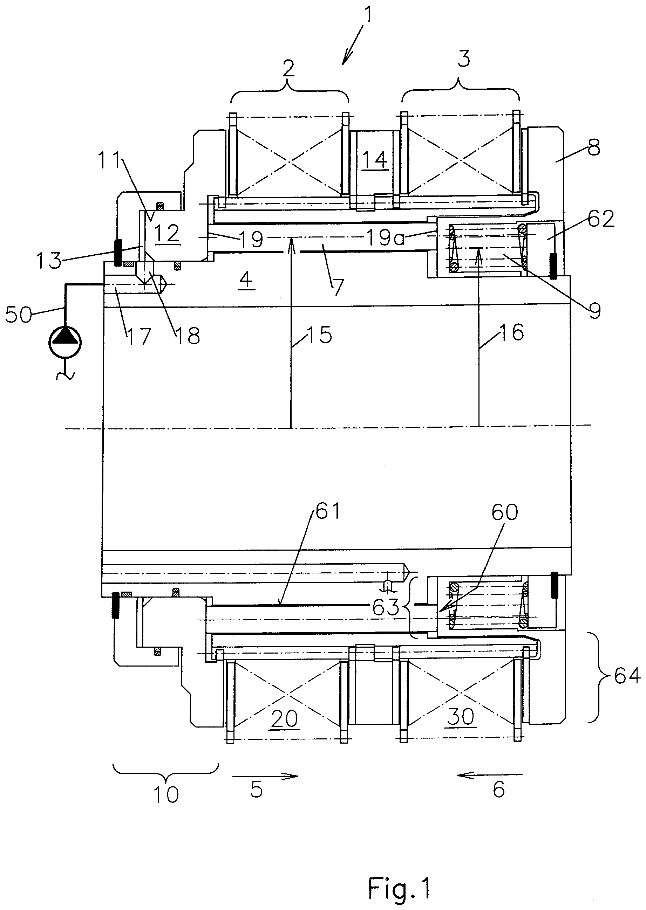

Im alternativen Ausführungsbeispiel der Fig.1 hingegen erstrecken sich die Druckbolzen 7 von der Kolben-Zylinder-Einheit 10 ausgehend nur auf einer Teillänge durch den Träger 4 hindurch bis in einen axialen Längsbereich, wo das Paket der Bremslamellen sitzt und stützen sich dort auf einer den Druckbolzen 7 zugewandten Ringfläche eines topfförmig ausgestalteten Druckstücks 8 ab, wobei die Federn sich auf der gegenüberliegenden Stirnfläche des einwärts gewandten Topfbereichs abstützen und mit ihrem anderen Ende auf einem bezüglich des Trägers 4 axial unverschieblichen Radialabsatz 62.

Der Unterschied zwischen den Ausführungsbeispielen der Fig.1 und 2 besteht also darin, dass im Ausführungsbeispiel der Fig.1 die Federn innerhalb des Innenkreises der Außenverzahnung des Trägers 4 sitzen und sich am bremsseitigen Ende des Trägers 4 axial nach außen auf einem Radialabsatz 62 abstützen, der starr mit dem Träger 4 verbunden ist wobei das Druckstück 8 einen in Schließrichtung der Bremse wirkenden inneren Ringbereich besitzt, auf welchem sich die Federn 9 in Schließrichtung der Bremse abstützen und gegenüberliegend zu den Abstützflächen der Federn der Druckbolzen.

Zu diesem Zweck ist der Druckring 8 topfförmig ausgestaltet und wird auf seinem Innenbund 63 auf einer Seite von den Federn 9 und auf der gegenüberliegenden Seite von den Druckbolzen 8 beaufschlagt, der Innenbund 63 liegt innerhalb des Innenkreises der Außenverzahnung des Trägers 4. Der Außenbund 64 des topfförmig ausgestalteten Druckrings umgreift sozusagen das Paket der Bremslamellen 3 und dient dann mit einer ringförmigen Druckfläche zur Beaufschlagung des Pakets aus Bremslamellen 3.

Im Ausführungsbeispiel der Fig.2 hingegen sitzen die Federn nicht, wie in Fig.1 innerhalb des Innenkreise der Außenverzahnung des Trägers sondern außerhalb des Außenkreises der Außenverzahnung des Trägers und werden zwischen dem axial starr mit dem Träger 4 verbundenen Radialabsatz 62 und einem ebenfalls scheibenförmigen Druckstück 8 unter Vorspannung gehalten.

Das scheibenförmige Druckstück 8 wird auf seiner, den Bremslamellen zugewandten, Innenfläche durch die Vorspannung der Federn 9 gegen den Druckbolzen 7 gefahren, der seinerseits den druckentlasteten Kolben 12 der Kolben-Zylinder-Einheit 10 zum Öffnen des Lamellenpakets der Kupplungslamellen veranlasst während zeitgleich die Bremse geschlossen wird.

Der zentrale Anschlag 14 hält jeweils rechts oder links beaufschlagbar dagegen und das Paket der Bremslamellen 3 bzw. Kupplungslamellen 2 wird in der erforderlichen Weise zusammengepresst.

Dabei ist der Anschlag 14 - hier - zweiteilig ausgebildet und sitzt auf dem Träger 4 einerseits unverdrehbar und andererseits axial unverschieblich zwischen dem Paket der Kupplungslamellen 2 und dem Paket der Bremslamellen 3.

Weiterhin lässt sich in Fig. 1 erkennen, dass Schraubenfedern 9 und Druckbolzen 7 auf demselben Radius 15 bzw. 16 angeordnet sind.

Geringfügige Radialabweichungen zwischen den beiderseitigen Radien 15,16 sollen allerdings von der Erfindung in vollem Umfang mit umfasst werden.

Aus der Darstellung gem. Fig.2 lässt sich erkennen, dass die Federn außerhalb des Außenkreises der Außenverzahnung des Trägers sitzen.

Es können somit mehr Federn untergebracht werden, als im Falle der Fig.1, bei welchem die Federn auf einem kleineren Radius angeordnet sind.

Da die Druckbolzen in jedem Falle aber, auch im Falle der Fig.1 keinen Einbauraum beanspruchen, der für die Anordnung der Federn benötigt wird, lassen sich dank der Erfindung ohne weiteres mehr Federn als Druckbolzen anbringen und auf diese Weise die übertragbaren Momente erhöhen.

In einem Ausführungsbeispiel genügen etwa vier gleichmäßig über den Umfang verteilte Druckbolzen, während ohne weiteres achtzehn oder mehr Federn gleichmäßig über den Umfang verteilt angeordnet sein können.

Wie man darüber hinaus leicht nachvollziehen kann, muss die Anzahl der Schraubenfedern 9 nicht zwingend mit der Anzahl der Zuganker 7 übereinstimmen.

Falls allerdings die Schraubenfedern 9 jeweils zwischen benachbarten Zugankern 7 sitzen, ist es eine Frage der Dimensionierung der Schraubenfedern 9, um möglicherweise bei Bedarf mehrere Schraubenfedern jeweils zwischen zwei benachbarten Zugankern anzuordnen.

Weiterhin zeigt Fig.1, dass die hydraulische Kolben-Zylinder-Einheit 10 über eine Axialbohrung 17, an die sich eine Radialbohrung 18 anschließt, mit dem hydraulischen Versorgungssystem 50 verbunden ist.

Die Hydraulikversorgung erfolgt daher über eine Kombination aus Axial- und Radialkanal im Träger 4, wobei sich an den Radialkanal unmittelbar der Hydraulikraum 13 der Kolben-Zylinder-Einheit 10 anschließt.

Weiterhin weisen die Druckbolzen 7 zwei endseitige Stirnflächen 19,19a auf, mit welchen sie sozusagen auf Anschlag auf dem Kolben 12 abgestützt sind sowie des weiteren am Druckstück 8 der Bremse.

Die Druckbolzen 7 weisen alle dieselbe wirksame Länge auf, so dass Kolben 12 und Druckstück 8 mit ihren jeweils wirksamen, den Paketen 2 und 3 zugewandten, Stirnflächen exakt parallel geführt sind.

Weiterhin wird durch die Anordnung der Schraubenfedern 9 und der Druckbolzen 7 innerhalb des Trägers 4 erreicht, dass das Paket der Kupplungslamellen 2 außerhalb derjenigen Durchmesser, auf welchen einerseits die Schraubenfedern 9 der Sicherheitsbremse 30 und andererseits die Druckbolzen 7 sitzen, von der Kolben-Zylinder-Einheit 10 beaufschlagbar sind.

Aus diesem Grund lassen sich die wirksamen Radien der jeweiligen Kupplungs- bzw. Bremslamellen praktisch bei unveränderter Baugröße der gesamten Kupplungs-Brems-Kombination 1 optimieren im Sinne des maximal möglichen Drehmoments.

### Bezugszeichenliste

- 1: Kupplungs-Brems-Kombination
- 2: Paket der Kupplungslamellen, Kupplungslamellen
- 3: Paket der Bremslamellen, Bremslamellen
- 4: Träger
- 5: Schließrichtung der Kupplung
- 6: Schließrichtung der Bremse
- 7: Koppelelement, Druckbolzen
- 8: Druckstück (Bremse)
- 9: Feder, Schraubenfeder
- 10: Kolben-Zylinder-Einheit
- 11: Zylinder
- 12: Kolben
- 13: Hydraulikraum
- 14: Anschlag für 2,3
- 15: Radius der 7
- 16: Radius der 9
- 17: Axialbohrung
- 18: Bohrung mit radialer Komponente
- 19: Stirnfläche
- 19a: Stirnfläche
- 20: Kupplung
- 30: Sicherheitsbremse
- 50: hydraulisches Versorgungssystem
- 60: innerer Ringbereich
- 61: Axialnut in 4
- 62: Radialabsatz
- 63: Innenbund
- 64: Außenbund

## Patentansprüche

1. Kupplungs-Brems-Kombination (1) mit hydraulischer Kolben-Zylinder-Einheit (10) zum Schließen der Kupplung (20) und einer in ihrer Schließrichtung (6) unter der Vorlast von Federn (9) stehenden Sicherheitsbremse (30), die mittels der Kolben-Zylinder-Einheit (10) gegen die Vorlast der Federn (9) beim Verlagern der Kupplung in Schließrichtung (5) gelüftet wird, und dass zu diesem Zweck ein Koppelelement (7) zwischen dem beweglichen Teil der Kolben-Zylinder-Einheit (10) und einem auf die Bremse (30) in ihrer Schließrichtung (6) wirkenden Druckstück (8) vorgesehen ist, **dadurch gekennzeichnet, dass** die Federn (9) auf der Seite der Sicherheitsbremse (30) des die jeweiligen Pakete (2,3) der Kupplungslamellen bzw. Bremslamellen aufnehmenden Trägers (4) sitzen, während die Koppelelemente (7) Druckbolzen sind, die sich axial von der Seite der Kupplung (20) zu der Seite der Sicherheitsbremse (30) durch den Träger erstrecken, und wobei sich die Federn (9) und die Koppelelemente (7) auf unterschiedlichen Seiten des Druckstücks (8) abstützen.

2. Kupplungs-Brems-Kombination (1) nach Anspruch 1, **dadurch gekennzeichnet, dass** die Federn innerhalb des Innenkreises der Außenverzahnung des Trägers (4) sitzen und sich am bremsseitigen Ende des Trägers (4) axial nach außen auf einem Radialabsatz (62) abstützen, der starr mit dem Träger (4) verbunden ist und dass das Druckstück (8) einen in Schließrichtung der Bremse wirksamen inneren Ringbereich (60) besitzt, auf welchem die Federn sich in Schließrichtung der Sicherheitsbremse abstützen und gegenüberliegend zu diesen Abstützstellen der Federn die Druckbolzen (7).

3. Kupplungs-Brems-Kombination (1) nach Anspruch 2, **dadurch gekennzeichnet, dass** das Druckstück (8) topfförmig ausgestaltet ist und mit seinem Innenbund (63) auf einer Seite von den Federn (9) und gegenüberliegend von den Druckbolzen (7) beaufschlagt wird sowie mit seinem Außenbund (64) zur Beaufschlagung des Pakets aus Bremslamellen (3) dient.

4. Kupplungs-Brems-Kombination (1) nach Anspruch 1, **dadurch gekennzeichnet, dass** die Federn außerhalb des Außenkreises der Außenverzahnung des Trägers (4) sitzen und sich am bremsseitigen Ende des Trägers (4) nach außen auf einem Radialabsatz (62) abstützen, der starr mit dem Träger (4) verbunden ist, und dass das Druckstück (8) eine Ringscheibe ist, die sich radial zwischen den Träger (4) und dem Außenradius des Pakets der Bremslamellen (3) erstreckt.

5. Kupplungs-Brems-Kombination (1) nach Anspruch 4, **dadurch gekennzeichnet, dass** die Federn (9) auf dem mittleren Radius des Reibbelangs des Pakets der Bremslamellen (3) sitzen.

6. Kupplungs-Brems-Kombination (1) nach einem der Ansprüche 1 bis 5, **dadurch gekennzeichnet, dass** die Federn (9) als Schraubenfedern ausgeführt sind, die in Sackbohrungen des Druckstücks (8) geführt sitzen.

7. Kupplungs-Brems-Kombination (1) nach Anspruch 6, **dadurch gekennzeichnet, dass** die Federn (9) zusätzlich auch in Sackbohrungen des Radialabsatzes (62) geführt sitzen.

8. Kupplungs-Brems-Kombination (1) nach einem der Ansprüche 1 bis 7, **dadurch gekennzeichnet, dass** die Druckbolzen (7) sich von der Kolben-Zylinder-Einheit (10) durch den Träger (4) hindurch bis zum Paket der Bremslamellen (3) oder darüber hinaus erstrecken und dort gemeinsam an dem als Druckring ausgebildeten Druckstück (8) angreifen und dass der Druckring die Bremslamellen (3) gegen einen zwischen den Kupplungslamellen (2) und Bremslamellen (3) befindlichen Anschlag (14) hält.

9. Kupplungs-Brems-Kombination (1) nach Anspruch 8, **dadurch gekennzeichnet, dass** der Anschlag (14) als separates Bauteil auf dem Träger (4) sitzt.

10. Kupplungs-Brems-Kombination (1) nach Anspruch 9, **dadurch gekennzeichnet, dass** der Anschlag (14) zwischen dem Paket der Bremslamellen (3) und dem Paket der Kupplungslamellen (2) axial unverschieblich auf dem Träger (4) sitzt und auf einer Seite von dem Paket der Kupplungslamellen (2) und auf der anderen Seite von dem Paket der Bremslamellen (3) beaufschlagt wird.

11. Kupplungs-Brems-Kombination (1) nach einem der Ansprüche 1 bis 10, **dadurch gekennzeichnet, dass** die Federn (9) jeweils zwischen benachbarten Druckbolzen (7) sitzen.

12. Kupplungs-Brems-Kombination (1) nach Anspruch 11, **dadurch gekennzeichnet, dass** jeweils mehrere Federn (9) zwischen zwei benachbarten Druckbolzen (7) sitzen.

13. Kupplungs-Brems-Kombination (1) nach einem der Ansprüche 1 bis 12, **dadurch gekennzeichnet, dass** die hydraulische Kolben-Zylinder-Einheit (10) über eine Axialbohrung (17) im Träger (4) mit sich anschließende Bohrung mit radialer Komponente (18) an ein hydraulisches Versorgungssystem (50) angeschlossen ist.

## Claims

1. A clutch-brake combination (1) comprising a hydraulic piston-cylinder unit (10) for closing the clutch (20) and a safety brake (30) which is under the preload of springs (9) in the closing direction (6) thereof, which safety brake (9) will be released by means of the piston-cylinder unit (10) against the preload of the springs (9) during shifting the clutch (20) into the closing direction (5) and that for this purpose a coupling element (7) is provided between the mobile part of the piston-cylinder unit (10) and a pressure piece (8) acting upon the brake (30) in the closing direction thereof (6), **characterized in that** the springs (9) are arranged on the side of the safety brake (30) of the carrier (4) which receives the respective packets (2, 3) of the clutch plates or brake plates, whereas the coupling elements (7) are pressure bolts, which extend axially from the side of the clutch (20) towards the side of the safety brake (30) through the carrier and wherein the springs (9) and the coupling elements (7) rest upon different sides of the pressure piece (8).

2. A clutch-brake combination (1) according to claim 1, **characterized in that** the springs are arranged inside the inner circle of the external tooth system of the carrier (4) and rest upon a radial section (62) at the end of the carrier (4) on the side of the brake in an axial outward direction, which radial section is rigidly connected to the carrier (4) and that the pressure piece (8) comprises an inner annular area (60) which acts in the closing direction of the brake, on which annular area the springs rest upon in the closing direction of the safety brake and the pressure bolts (7) rest upon the annular area on the opposite side of these support points of the springs,

3. A clutch-brake combination (1) according to claim 2, **characterized in that** the pressure piece (8) is designed in a pot-shaped manner and will be acted upon by the inner collar (63) thereof on one side of the springs (9) and on the opposite side of the pressure bolts (7), as well as serves by the outer collar thereof (64) for acting upon the packet made of brake plates (3)..

4. A clutch-brake combination (1) according to claim 1, **characterized in that** the springs are arranged outside the outer circle of the external tooth system of the carrier (4) and rest outward upon a radial shoulder (62) at the brake side end of the carrier (4), which radial shoulder (62) is rigidly connected to the carrier (4), and that the pressure piece (8) is an annular disc which radially extends between the carrier (4) and the outer radius of the packet of the brake plates (3).

5. A clutch-brake combination (1) according to claim 4, **characterized in that** the springs (9) are arranged on the middle radius of the friction lining of the packet of the brake plates (3).

6. A clutch-brake combination (1) according to one of the claims 1 through 5, **characterized in that** the springs (9) are designed as coil springs which are guided inside blind holes of the pressure piece (8).

7. A clutch-brake combination (1) according to claim 6, **characterized in that** the springs (9) are additionally also guided inside blind holes of the radial shoulder (62).

8. A clutch-brake combination (1) according to one of the claims 1 through 7, **characterized in that** the pressure bolts (7) extend from the piston-cylinder unit (10) through the carrier (4) up to the packet of the brake plates (3) or beyond it and jointly act upon the pressure piece (8) there which is designed as a pressure ring and that the pressure ring holds the brake plates (3) against a stop (14) that is arranged between the clutch plates (2) and the brake plates (3).

9. A clutch-brake combination (1) according to claim 8, **characterized in that** the stop (14) is arranged on the carrier (4) as a separate component.

10. A clutch-brake combination (1) according to claim 9, **characterized in that** the stop (14) is arranged in an axially non-displaceable manner on the carrier (4) between the packet of the brake plates (9) and the packet of the clutch plates (2) and will be acted upon on one side by the packet of the clutch plates (2) and on the other side by the packet of the brake plates (3).

11. A clutch-brake combination (1) according to one of the claims 1 through 10, **characterized in that** the springs (9) are respectively arranged between adjacent pressure bolts (7).

12. A clutch-brake combination (1) according to claim 11, **characterized in that** respectively several springs (9) are arranged between two adjacent pressure bolts (7).

13. A clutch-brake combination (1) according to one of the claims 1 through 12, **characterized in that** the hydraulic piston-cylinder unit (10) is connected to a hydraulic supply system (50) via an axial hole (17) in the carrier (4) and a subsequent hole with a radial component (18).

## Revendications

1. Ensemble embrayage-frein (1) comprenant une unité piston/cylindre hydraulique (10) destinée à fermer l'embrayage (20) et un frein de sécurité (30) se trouvant sous une précontrainte de ressorts (9) dans la direction de fermeture (6) de celui-ci, lequel frein de sécurité (30) est débloqué par moyen de l'unité piston/cylindre (10) contre la précontrainte des ressorts (9) au cours du changement de l'embrayage dans la direction de fermeture (5) et qu'à cette fin un élément d'accouplement (7) est prévu entre la partie mobile de l'unité piston/cylindre (10) et une pièce de pression (8), qui agit sur le frein (30) dans la direction de fermeture de celui-ci, **caractérisé en ce que** les ressorts (9) sont disposés sur le côté du frein de sécurité (30) du support (4) recevant les paquets respectifs (2, 3) des disques d'embrayage ou des disques de frein, tandis que les éléments d'accouplement (7) sont des boulons de pression, qui s'étendent axialement à partir du côté de l'embrayage (20) à travers le support jusqu'au côté du frein de sécurité (30), et les ressorts (9) et les éléments d'accouplement (7) s'appuyant sur des côtés différents de la pièce de pression (8).

2. Ensemble embrayage-frein (1) selon la revendication 1, **caractérisé en ce que** les ressorts sont disposés à l'intérieur du cercle intérieur de l'engrenage extérieur du support (4) et s'appuient axialement vers l'extérieur contre un épaulement radial (62) à l'extrémité du support (4) sur le côté du frein, l'épaulement radial (62) étant relié de manière rigide au support (4), et que la pièce de pression (8) comprend une partie annulaire intérieure (60), qui agit dans la direction de fermeture du frein, sur laquelle partie annulaire s'appuient les ressorts dans la direction de fermeture du frein de sécurité et les boulons de pression s'appuient sur celle-ci sur le côté opposé à ces points d'appui des ressorts.

3. Ensemble embrayage-frein (1) selon la revendication 2, **caractérisé en ce que** la pièce de pression (8) est configurée en forme d'un pot et sera soumise à une force par sa collerette intérieure (63) sur le côté des ressorts (9) et sur le côté opposé des boulons de pression (7), et qui sert par sa collerette extérieure (64) à agir sur le paquet formé par des disques de frein (3).

4. Ensemble embrayage-frein (1) selon la revendication 1, **caractérisé en ce que** les ressorts sont disposés à l'extérieur du cercle extérieur de l'engrenage extérieur du support (4) et s'appuient vers l'extérieur sur un épaulement radial (62) à l'extrémité du support (4) sur le côté du frein, lequel épaulement radial (62) est relié de manière rigide au support (4), et que la pièce de pression (8) est un disque annulaire, qui s'étend radialement entre le support (4) et le rayon extérieur du paquet des disques de frein (3).

5. Ensemble embrayage-frein (1) selon la revendication 4, **caractérisé en ce que** les ressorts (9) sont disposés sur le rayon central de la garniture de friction du paquet des disques de frein (3).

6. Ensemble embrayage-frein (1) selon l'une des revendications 1 à 5, **caractérisé en ce que** les ressorts (9) sont configurés comme des ressorts en spirale, qui sont guidés dans des trous borgne de la pièce de pression (8).

7. Ensemble embrayage-frein (1) selon la revendication 6, **caractérisé en ce que** les ressorts (9) sont supplémentairement guidés dans des trous borgne de l'épaulement radial (62).

8. Ensemble embrayage-frein (1) selon l'une des revendications 1 à 7, **caractérisé en ce que** les boulons de pression (7) s'étendent à partir de l'unité piston/cylindre (10) à travers le support (4) jusqu'au paquet des disques de frein (3) ou au-delà de celui-ci et y agissent ensemble sur la pièce de pression (8) configurée comme une bague de pression, et que la bague de pression retient les disques de frein (3) contre une butée (14) disposée entre les disques d'embrayage (2) et les disques de frein (3).

9. Ensemble embrayage-frein (1) selon la revendication 8, **caractérisé en ce que** la butée (14) se trouve sur le support (4) comme un élément de construction séparé.

10. Ensemble embrayage-frein (1) selon la revendication 9, **caractérisé en ce que** la butée (14) est disposée de manière non déplaçable axialement sur le support (4) entre le paquet des disques de frein (3) et le paquet des disques
d'embrayage et est sur un côté soumis à une force par le paquet des disques d'embrayage (2) et sur l'autre côté par le paquet des disques de frein (3).

11. Ensemble embrayage-frein (1) selon l'une des revendications 1 à 10, **caractérisé en ce que** les ressorts (9) sont respectivement disposés entre des boulons de pression (7) adjacents.

12. Ensemble embrayage-frein (1) selon la revendication 10, **caractérisé en ce que** respectivement plusieurs ressorts (9) sont disposés antre deux boulons de pression (7) adjacents.

13. Ensemble embrayage-frein (1) selon l'une des revendications 1 à 12, **caractérisé en ce que** l'unité piston/cylindre hydraulique (10) est raccordée à un système d'alimentation hydraulique (50) via un trou de forage axial (17) dans le support (4) avec un trou de forage suivant ayant une composante radiale (18).
